# EUROPÄISCHE PATENTSCHRIFT

(11) **EP 3 726 070 B1**
(45) Veröffentlichungstag und Bekanntmachung des Hinweises auf die Patenterteilung: **06.10.2021**
(21) Anmeldenummer: 19170206.7
(22) Anmeldetag: 18.04.2019
(51) Int. Cl.: F16B 19/10, B21J 15/04, B62D 29/00, B62D 27/02, B62D 33/04

(54) **AUFBAU EINES NUTZFAHRZEUGS UND VERFAHREN ZUR BEFESTIGUNG EINES BAUTEILS**
STRUCTURE FOR A COMMERCIAL VEHICLE AND METHOD FOR FIXING A COMPONENT
CONSTRUCTION D'UN VÉHICULE UTILITAIRE ET PROCÉDÉ DE FIXATION D'UN COMPOSANT

(43) Veröffentlichungstag der Anmeldung: 21.10.2020
(73) Patentinhaber: Schmitz Cargobull AG, 48341 Altenberge (DE)
(72) Erfinder: Ganszczyk, Arkadiusz, 45881 Gelsenkirchen (DE)
(74) Vertreter: Cohausz & Florack

(56) Entgegenhaltungen:
- WO-A2-2015/132664
- TITGEMEYER: INTERNET CITATION, Seite 33, XP009516277, Gefunden im Internet: URL:https://docplayer.org/25667626-Praxish andbuch-befestigungstechnik-im-fahrzeugbau .html [gefunden am 2019-09-25]

## Beschreibung

Die Erfindung betrifft einen Aufbau eines Nutzfahrzeugs, der ein Wand- oder ein Dachelement umfasst, das durch mindestens ein Paneel gebildet ist, welches nach Art eines Sandwiches aus einer geschäumten Kernschicht und mindestens einer aus einem plastisch umformbaren Material bestehenden Deckschicht gebildet ist, die die Kernschicht an einer ihrer Seitenflächen bedeckt. Dabei ist an der von der Kernschicht abgewandten Außenseite der Deckschicht ein Bauteil mittels eines Blindniets befestigt, der in zueinander fluchtend in das Bauteil und die Deckschicht eingebrachte Öffnungen sitzt.

Ebenso betrifft die Erfindung ein Verfahren zur Befestigung eines Bauteils an einem Wand- oder Deckenpaneel eines solchen Aufbaus.

Bei Nutzfahrzeugen der hier in Rede stehenden Art handelt es sich um Lastkraftwagen, Anhänger oder Sattelauflieger und desgleichen, die unabhängig von ihrer Ausgestaltung für den Transport von Gütern im Straßenverkehr bestimmt sind. Nutzfahrzeuge mit Kofferaufbauten kommen dabei zum Einsatz, wenn das zu transportierende Gut in besonderer Weise gegenüber Einflüssen aus der Umgebung geschützt werden muss.

Der Kofferaufbau, der aus stabilen Dach-, Längsseitenwand-, Stirnwand- und Rückwandelementen zusammengesetzt ist, schirmt das Transportgut gegen Temperaturschwankungen, Feuchtigkeit oder sonstige äußere Gegebenheiten ab, durch die das Transportgut beschädigt oder in seiner Qualität beeinflusst werden könnte.

Ein Fahrzeugaufbau, bei dem Wand- und Deckenpaneele mit einer Deckschicht und daran angeschäumter Kernschicht zum Einsatz kommen, ist beispielsweise aus der EP 2 392 453 B1 bekannt. Zudem ist es aus dem von der Gebr. TITGEMEYER GmbH & Co. KG, 49084 Osnabrück, Deutschland, veröffentlichten "PRAXISHANDBUCH Befestigungstechnik im Fahrzeugbau" mit dem Veröffentlichungsvermerk "TITGEMEYER Tf1689D(1016)1", Seite 33, bekannt, wie sich Bauteile an solchen Wand- oder Deckenpaneelen eines Fahrzeugaufbaus mittels Blindnieten befestigen lassen.

Wie in dem PRAXIHANDBUCH erläutert, umfassen Blindnieten, die für die erfindungsgemäßen Zwecke geeignet sind, eine Niethülse, einen Setzkopf, der an einen ersten Rand der Niethülse angeformt ist, und einen Nietdorn, der mit seinem Nietdornkopf an einem anderen Rand der Niethülse ansetzt. Im Zuge des Vernietvorgangs wird die Niethülse durch Einziehen des Nietdornkopfs zu einem Schließkopf geformt. Zum Vernieten eines Bauteils an einem Blechmaterial wird von der zugänglichen Seite des Bauteils her der Blindniet durch eine im jeweils zu befestigenden Bauteil eingebrachte Öffnung und eine damit zur Deckung gebrachte Öffnung des Blechmaterials eingeführt. Mit Hilfe eines geeigneten Nietwerkzeuges wird dann der am Setzkopf des Blindniets herausragende Nietdorn gezogen. Dazu wird das Werkzeug gegen den Setzkopf gepresst. Durch die Zugkraft, die auf den Nietdorn ausgeübt wird, wird die Niethülse im nicht zugänglichen, durch das Blechmaterial abgeschirmten Bereich gestaucht und zu einem Schließkopf verformt. Der Schließkopf vergrößert dabei seinen Durchmesser, bis er die Öffnungen von Blechmaterial und Bauteil verschließt und dicht an der vom Bauteil abgewandten Seite des Blechs anliegt. Der Zug an dem Nietdorn wird fortgesetzt, bis die Zugkräfte und der den Zugkräften entgegengesetzte Verformungswiderstand des Schließkopfes so stark angestiegen sind, dass der Nietdorn an einer innerhalb der Niethülse vorgesehenen Sollbruchstelle abreißt. Damit ist die auch als "Setzvorgang" bezeichnete Verformung der Niethülse zu dem Schließkopf abgeschlossen und die Vernietung fertig hergestellt.

Bei den Bauteilen, die mittels des Blindniets in der voranstehend erwähnten Weise an dem jeweiligen Wand- oder Deckenpaneel des Aufbaus befestigt sind, handelt es sich typischerweise um Zurrleisten, Anschläge oder sonstige Profilelemente, die zur Befestigung des jeweils zu transportierenden Guts in einem von dem Aufbau umgrenzten Laderaum dienen.

Die dabei auf das jeweilige Bauteil wirkenden Belastungen sind erheblich. Sie können so groß werden, dass die üblicherweise aus einem dünnen, typischerweise nur 0,3 - 1 mm dicken Metallblech, insbesondere einem Stahl- oder Aluminiumblech, gebildete Deckschicht diesen Belastungen im Bereich der Vernietung, über die das jeweilige Bauteil an der Deckschicht gehalten ist, ohne zusätzliche Maßnahmen nicht standhält.

Daher werden in der Praxis die Deckschichten der Wand- oder Deckenpaneele in einem Bereich, in dem jeweils ein Bauteil befestigt werden soll, verstärkt, indem in dem betreffenden Bereich auf der der Kernschicht zugeordneten Seite der Deckschicht ein Verstärkungsblech angeordnet wird, gegen das sich der Blindniet nach seiner Verformung mit seinem Schließkopf abstützt.

Die Montage der zusätzlichen Verstärkungsbleche ist aufwändig und erfordert bei der Herstellung der entsprechend ausgestatteten Wand- oder Deckenpaneele einen zusätzlichen Fertigungsaufwand. Darüber hinaus lassen sich an solchen Flächenabschnitten, an denen keine Verstärkung vorgesehen ist, nachträglich keine Bauteile mittels Nietverbindungen mehr befestigen.

Vor diesem Hintergrund hat sich die Aufgabe ergeben, einen Aufbau der eingangs angegebenen Art zu nennen, bei dem an beliebiger Stelle der Deckschicht der Paneele, die die Wand- oder Decken-Elemente des Aufbaus bilden, ein Bauteil mittels Blindnieten dauerhaft sicher befestigt werden kann.

Ebenso sollte ein Verfahren genannt werden, mit dem sich ein Bauteil an einer beliebigen Stelle der Deckschicht eines Paneels befestigen lässt, das ein Wand- oder Dachelement eines Aufbaus der voranstehend erläuterten Art bildet.

Ein diese Aufgabe lösender Aufbau besitzt erfindungsgemäß mindestens die in Anspruch 1 angegebenen Merkmale.

Ein die voranstehend genannte Aufgabe erfindungsgemäß lösendes Verfahren ist in Anspruch 7 angegeben.

Vorteilhafte Ausgestaltungen der Erfindung sind in den abhängigen Ansprüchen angegeben und werden wie der allgemeine Erfindungsgedanke nachfolgend im Einzelnen erläutert.

In Übereinstimmung mit dem eingangs angegebenen Stand der Technik umfasst ein erfindungsgemäßer Aufbau eines Nutzfahrzeugs ein Wand- oder ein Dachelement, das durch ein Paneel gebildet ist, welches nach Art eines Sandwiches aus einer geschäumten Kernschicht und mindestens einer aus einem plastisch umformbaren Material bestehenden Deckschicht gebildet ist, die die Kernschicht an einer ihrer Seitenflächen bedeckt, und wobei an der von der Kernschicht abgewandten Außenseite der Deckschicht ein Bauteil durch eine Vernietung mittels eines Blindniets befestigt ist, die in zueinander fluchtend in das Bauteil und die Deckschicht eingebrachten Öffnungen sitzt.

Erfindungsgemäß ist nun bei einem solchen Aufbau der die Öffnung der Deckschicht des jeweiligen Paneels umgrenzende Randbereich der Deckschicht zumindest abschnittsweise zu einem in die Kernschicht hineinragenden Kragen kaltumgeformt, der in Folge seiner Kaltumformung eine höhere Formsteifigkeit besitzt, als der den Kragen umgebende Bereich der Deckschicht.

Gemäß der Erfindung ist also die Öffnung, durch welche der Blindniet mit seiner Niethülse für die Befestigung des Bauteils gesteckt wird, durch seine Umformung zu einem Kragen ausgesteift. Der Kragen ist dabei durch einen Kaltumformvorgang erzeugt, bei der das Material der Deckschicht in dem die jeweilige Öffnung umgebenden Randbereich bei Raumtemperatur, jedenfalls aber unterhalb der Rekristallisationstemperatur des Metallwerkstoffs, aus dem die Deckschicht besteht, plastisch verformt wird. Dabei kommt es zu einer Kaltverfestigung, die mit zunehmender Verformung stetig ansteigt.

Hier hat sich überraschend erwiesen, dass schon die durch die erfindungsgemäß vorgesehene Kragenbildung bewirkte Verfestigung des Randbereichs, der die jeweils für die Vernietung vorgesehene Öffnung umgibt, eine erhebliche Steigerung der Festigkeit und Formbeständigkeit des betreffenden Randbereichs erzielt werden kann. Diese ist so groß, dass auch dann ein dauerhaft sicherer Halt der Vernietung an dem jeweiligen Paneel sichergestellt ist, wenn kein zusätzliches Verstärkungsblech oder desgleichen im Bereich der Vernietung vorgesehen ist. Mit der Erfindung gelingt es somit, Bauteile an einem Paneel, das ein Wand- oder ein Deckenelement eines Fahrzeugaufbaus bildet, auch dann sicher zu befestigen, wenn das Paneel lediglich eine dünne, aus Metallwerkstoff bestehende Deckschicht umfasst, an der auch in den Bereichen, in denen die Vernietung der Bauteile vorgenommen wird, keine Verstärkung vorhanden ist. So können erfindungsgemäße Befestigungen an jeder beliebigen Stelle der Deckschicht eines Paneels eines Fahrzeugaufbaus vorgenommen werden, ohne dass dazu das betreffende Paneel in besonderer Weise vorbereitet sein muss. Ebenso wenig ist es mit der Erfindung erforderlich, im Zuge der Herstellung der Paneele für die Wand- oder Deckenelemente eines erfindungsgemäßen Aufbaus besondere, von dem Standardverfahren abweichende Fertigungsrouten vorzusehen, um die Befestigung von in der Praxis hoch belasteten Bauteilen an den betreffenden Paneelen zu ermöglichen. Stattdessen eignet sich für die erfindungsgemäße Befestigung jedes Paneel, welches mit einer metallischen Deckschicht versehen ist, die eine zur Ausprägung eines erfindungsgemäß vorgesehenen Kragens ausreichende Kaltverformbarkeit besitzt.

Den voranstehenden Erläuterungen entsprechend umfasst ein erfindungsgemäßes Verfahren zum Befestigen eines Bauteils an einem Wand- oder einem Dach-Element eines Aufbaus eines Nutzfahrzeugs, das durch ein Paneel gebildet ist, welches nach Art eines Sandwiches aus einer geschäumten Kernschicht und mindestens einer aus einem plastisch verformbaren Material bestehenden Deckschicht gebildet ist, die die Kernschicht an einer ihrer Seitenflächen bedeckt, folgende Arbeitsschritte:
a) Bereitstellen des Paneels;
b) Einbringen einer Öffnung in die Deckschicht des Paneels;
c) Kaltumformen des die eingebrachte Öffnung umgrenzenden Randbereichs der Deckschicht mittels eines Dornwerkzeugs zu einem in die Kernschicht hineinragenden Kragen;
d) Ansetzen des Bauteils an die Außenseite der Deckschicht des Paneels und Ausrichten einer an dem Bauteil vorgesehenen Öffnung derart, dass die Öffnung des Bauteils mit der in die Deckschicht des Paneels eingebrachten Öffnung zur Deckung gebracht ist;
e) Fixieren des Bauteils an dem Paneel mittels eines Blindniets, der durch die zueinander in Deckung gebrachte Öffnung des Bauteils und der Deckschicht gesteckt wird.

Erfindungsgemäß wird somit ein fertig hergestelltes Paneel bereitgestellt (Arbeitsschritt a)), das nach Art eines Sandwiches aus mindestens einer formsteifen Deckschicht und einer daran angeschäumten Kernschicht besteht, die an einer ihrer Seitenflächen durch die betreffende Deckschicht bedeckt ist. Typischerweise ist dabei die aus einem porigen, gut wärmeisolierenden Material bestehende Kernschicht an ihren beiden Seitenflächen mit jeweils einer derartigen Deckschicht bedeckt, während ihre Schmalseiten entweder offen liegen oder beispielsweise von einem Profilabschnitt bedeckt sind, über das das Paneel mit einem benachbart angeordneten Paneel verbunden werden kann. Beim erfindungsgemäßen Verfahren kann also das Paneel, an das das jeweilige Bauteil befestigt werden soll, in konventioneller Weise ohne Rücksicht auf die geplante Befestigung des Bauteils erzeugt werden. Insbesondere ist es bei der erfindungsgemäßen Vorgehensweise nicht mehr nötig, vor dem Anschäumen der Kernschicht Öffnungen in der jeweiligen Deckschicht einzuformen und zu verstärken, die für das Anschäumen der Kernschicht aufwändig abgedeckt werden müssen, um ein Abfließen des die Kernschicht bildenden Werkstoffs während des Anschäumvorgangs zu vermeiden.

Das Einbringen der Öffnung in die Deckschicht des Paneels im Arbeitsschritt b) kann in jeder Weise erfolgen, die aus der Praxis als für diese Zwecke geeignet bekannt und bewährt ist. So kann die Öffnung beispielsweise durch Bohren, Stanzen, Schneiden oder jedes andere vergleichbare Verfahren erzeugt werden, mit dem der Metallwerkstoff, aus dem die Deckschicht besteht, zerteilt werden kann.

Für den Arbeitsschritt c) des erfindungsgemäßen Verfahrens wird beispielsweise ein dornartiges Werkzeug bereitgestellt, wie es für diese Zwecke im Stand der Technik ebenfalls bekannt und üblicherweise für das Aufweiten von Öffnungen in Blechen und desgleichen unter Ausbildung eines Kragens ohne Gegenhalter eingesetzt wird. Ein hierzu geeignetes Werkzeug weist typischerweise einen spitz zulaufenden, üblicherweise kegelförmigen Endabschnitt auf, der in seinem Spitzenbereich einen kleineren Durchmesser hat als die aufzuweitende Öffnung. Darauf folgt ein Dornabschnitt, der in der Regel in einem kontinuierlichen sprungfreien Übergang an den Endabschnitt angeschlossen und so geformt ist, dass der die jeweilige Öffnung umgebende und zu verformende Randbereich der Deckschicht bei fortgesetzter Einführbewegung entlang der Umfangsfläche des Dornabschnitts fließt und dabei die gewünschte Kaltformgebung erhält. Eine gleichmäßig in Richtung der Kernschicht des jeweiligen Paneels gekrümmte Gestalt des Kragens kann dabei dadurch erzielt werden, dass der Dornabschnitt in seinem Umfangsbereich eine umlaufende Kehle aufweist, die die Form bestimmt, in der der Kragen in Richtung der Kernschicht verformt wird.

Die Arbeitsschritte b) und c) können, wie aus dem voranstehenden Absatz hervorgeht, separat vorgenommen werden, so dass, wie voranstehend erläutert, für den Arbeitsschritt b) ein anderes Werkzeug als für den Arbeitsschritt c) eingesetzt wird.

Besonders vorteilhaft ist es jedoch, wenn die Arbeitsschritte b) und c) in einem Zuge durchgeführt werden, wenn also mit einem Werkzeug in einem kontinuierlichen Bewegungsablauf zunächst die Öffnung in die Deckschicht geformt (Arbeitsschritt b)) und unmittelbar anschließend durch eine unterbrechungsfrei fortgesetzte Bewegung des Werkzeugs der Kragen gezogen wird (Arbeitsschritt c)). Ein hierzu geeignetes Werkzeug weist ebenfalls eine dornartige Gestalt auf. Die Spitze des Werkzeugs kann dabei nach Art eines Stech- oder Stanzwerkzeugs ausgebildet sein. An die Spitze des Werkzeugs folgt dann in Längsrichtung ein Ziehabschnitt, dessen Umfangsdurchmesser mit zunehmender Entfernung von der Spitze, optimalerweise sprungfrei und stetig, zunimmt. Ein solches Werkzeug wird zum Ausbilden der Öffnung mit der Spitze voran gegen die jeweilige Deckschicht des Paneels bewegt, bis das Werkzeug die Deckschicht durchbricht und eine Öffnung der Deckschicht gebildet ist. Anschließend wird die Bewegung des Werkzeugs in das Paneel fortgesetzt, so dass der die zuvor geformte Öffnung umgebende Randbereich der Deckschicht entlang des Ziehabschnitts gleitet und damit zu einem in die Kernschicht des Paneels hineinragenden Kragen kaltgeformt wird. Eine solche in einem Zug erfolgende Formung von Öffnung und Kragen ist nicht nur fertigungstechnisch besonders vorteilhaft, weil die Erzeugung von Öffnung und Kragen in kürzester Zeit und ohne Werkzeugwechsel erfolgen kann, sondern auch hinsichtlich der Formsteifigkeit und Festigkeit des die Öffnung umgebenden, als Kragen geformten Randbereichs, da es nicht erst bei der Verformung des betreffenden Randbereichs, sondern schon beim Einformen der Öffnung in die Deckschicht zu einer Kaltverfestigung kommt.

Mit der mit einem so gebildeten Kragen umgrenzten Öffnung wird im Arbeitsschritt d) die Öffnung des jeweils an der Außenseite der Deckschicht des Paneels zu befestigenden Bauteils so zur Deckung gebracht, dass beide Öffnungen zueinander fluchtend ausgerichtet sind.

Der nach der Kaltformgebung des Kragens freie Öffnungsquerschnitt der in die Deckschicht eingebrachten Öffnung entspricht dabei optimalerweise möglichst exakt dem Öffnungsquerschnitt der im Bauteil vorhandenen Öffnung. Dieser wird nach Maßgabe des Herstellers des zur Befestigung des Bauteils verwendeten Blindniets so gewählt, dass einerseits die Niethülse des Blindniets leicht in die Öffnungen eingeschoben werden kann und andererseits nach Abschluss des Setzvorgangs der Blindniet mit seinem durch den Setzvorgang gebildeten Schließkopf sicher an der von dem Bauteil abgewandten, der geschäumten Kernschicht des Paneels zugewandten Seite der Deckschicht sitzt (Arbeitsschritt e)).

Besonders geeignet für die erfindungsgemäßen Zwecke sind Blindnieten, die als so genannte "Presslaschenblindnieten" ausgebildet sind. Wie in dem eingangs erwähnten PRAXISHANDBUCH erläutert, zeichnen sich solche Presslaschenblindnieten dadurch aus, dass sie während des Setzvorgangs sternförmig von dem aus der Niethülse gebildeten Schließkopf abstehende Laschen auf der unzugänglichen Seite der Nietverbindung bilden, durch die der Schließkopf großflächig auf der vom Bauteil abgewandten Seite der Deckschicht anliegt. Dabei legen sich die Laschen des Schließkopfs um den erfindungsgemäß vorgesehenen Kragen, so dass dessen formaussteifende Wirkung unbeeinträchtigt bleibt.

Eine erfindungsgemäße Befestigung eines Bauteils lässt sich insbesondere an solchen Paneele verwirklichen, deren Deckschichten aus einem Stahlblech oder einem Leichtmetallblech, insbesondere einem Blech, das aus Aluminiumwerkstoff mit ausreichender Verformbarkeit besteht, hergestellt sind. Stahlbleche, die hierzu geeignet sind, bestehen beispielsweise aus den unter der Bezeichnung S355 (Werkstoffnummer 1.0045) oder S280 (Werkstoffnummer 1.0244) bekannten Stählen. Aluminiumbleche, die sich für die erfindungsgemäßen Zwecke eignen, bestehen beispielsweise aus dem unter der EN-Bezeichnung EN AW-8006 bekannten Aluminiumwerkstoff.

Grundsätzlich wird die erfindungsgemäß genutzte aussteifende Wirkung des erfindungsgemäß die jeweilige Öffnung umgebenden Kragens schon dann erreicht, wenn der Kragen nur abschnittsweise die Öffnung umgibt, sich also jeweils über einen Teilabschnitt des Öffnungsumfangs erstreckt. So können mehrere Kragenabschnitte beispielsweise in gleichmäßigen Abständen verteilt an dem Öffnungsrand vorgesehen sein.

Eine besonders gute aussteifende Wirkung des erfindungsgemäßen Kragens kann dadurch dann erreicht werden, dass der Kragen vollständig um die Öffnung der Deckschicht umlaufend ausgebildet wird.

Die Gefahr, dass sich bei höheren Belastungen oder bei der Umformung des Kragens Risse bilden, kann dadurch abgewendet werden, dass der Kragen in einem Schnitt längs der Längsachse der Öffnung gesehen gleichmäßig gekrümmt ausgebildet wird, so dass er nach seiner Umformung einen in die Kernlage hinein gleichmäßig gekrümmten Bogenabschnitt umfasst. Beispielsweise kann hierzu der betreffende Bogenabschnitt einen Viertelkreis bilden.

Die Form der für die Vernietung in das Bauteil und in die Deckschicht eingebrachten Öffnungen wird nach den Vorgaben des Herstellers der zur Befestigung verwendeten Blindnieten gewählt. Typischerweise eignen sich hierzu Öffnungen mit kreisrundem Öffnungsquerschnitt.

Nachfolgend wird die Erfindung anhand einer ein Ausführungsbeispiel darstellenden Zeichnung näher erläutert. Es zeigen jeweils schematisch:
- Fig. 1: einen Ausschnitt eines Dachelements in einer perspektivischen Schnittansicht von unten;
- Fig. 2a: das Dachelement gemäß Fig. 1 in einem Schnitt entlang der in Fig. 1 eingezeichneten Schnittlinie X-X mit einem für das Einbringen einer Öffnung in die Deckschicht und das Kaltformen eines die Öffnung umgebenden Kragens bereitstehenden Dornwerkzeugs;
- Fig. 2b: das Dachelement gemäß Fig. 1 in einer der Fig. 2a entsprechenden Darstellung mit dem Dornwerkzeug in seiner Endstellung nach der abgeschlossenen Kaltformung des Kragens;
- Fig. 3: das Dachelement gemäß Fig. 1 in einer der Fig. 2a entsprechenden Schnittdarstellung zu Beginn des Vernietungsvorgangs;
- Fig. 4: das Dachelement gemäß Fig. 1 in einer der Fig. 2 entsprechenden Schnittdarstellung nach Abschluss des Vernietungsvorgangs.

Das Dachelement 1 ist Teil eines hier weiter nicht gezeigten quaderförmigen Aufbaus eines hier ebenfalls nicht dargestellten Sattelaufliegers, der beispielsweise zum Transport von Trocken- oder Kühlgut bestimmt ist. Der das Dachelement 1 umfassende Aufbau umgrenzt einen Laderaum R, der das Transportgut aufnimmt. Ein Beispiel für einen entsprechenden Aufbau und ein mit einem solchen Aufbau ausgestattetes Fahrzeug ist in der eingangs schon erwähnten EP 2 392 453 B1 erläutert.

Das Dachelement 1 ist durch mehrere gleichartige Paneele 2,3 gebildet, die an ihren Außenseiten jeweils eine Deckschicht 4,5 aufweisen, die aus hierfür im Stand der Technik üblicherweise verwendeten Stahl- oder Aluminiumblechen bestehen. Zwischen den Deckschichten 4,5 der Paneele 2,3 ist eine von den Deckschichten 4,5 gegenüber der Umgebung abgeschirmte, an die Deckschichten 4,5 angeschäumte Kernlage 6 vorgesehen, die ebenfalls aus hierfür bekanntem, hoch wärmedämmenden Werkstoff besteht.

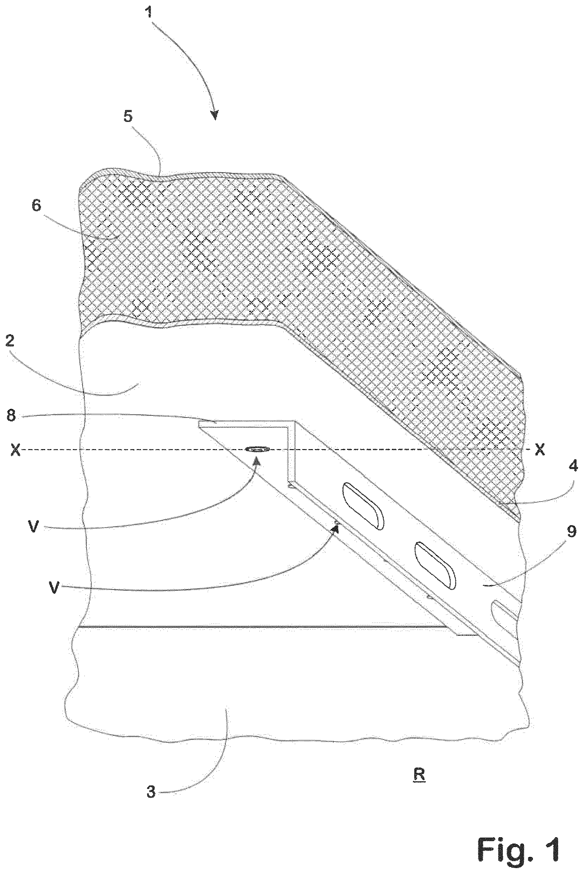

An der dem Laderaum R des Aufbaus zugeordneten Außenseite 7 der dem Laderaum R zugeordneten Deckschicht 4 ist mit seinem einen Schenkel 8 ein winkelförmiges Profilelement 9 mittels Vernietungen V befestigt. Das Profilelement 9 kann beispielsweise zum hängenden Transport oder zum Verzurren von Transportgut im Laderaum R genutzt werden. Hierzu kann das Profilelement 9 an seinem vom Dachelement 1 senkrecht abstehenden Schenkel mit geeigneten Öffnungen, Anschlägen oder desgleichen versehen sein, wie in Fig. 1 angedeutet.

Die Vernietungen V sind mittels konventioneller, als Presslaschenblindnieten ausgebildete Blindnieten 10 hergestellt, die im Neuzustand jeweils eine Niethülse 11, einen an den einen Rand der Niethülse 11 angeformten, als um den betreffenden Rand der Niethülse 11 umlaufenden Kragen ausgebildeten Setzkopf 12 und einen Nietdorn 13 umfassen, der mit seinem gegenüber dem Durchmesser der Niethülse 11 verbreiterten Nietdornkopf 14 an dem Setzkopf 12 abgewandten Rand der Niethülse 11 sitzt. Der Nietdorn 13 ist ausgehend von seinem Nietdornkopf 14 durch die Niethülse 11 geführt und steht über den Setzkopf 12 hinaus. Im Bereich der Niethülse 11 weist der Nietdorn 13 eine hier nicht sichtbare Sollbruchstelle auf. In die Niethülse 11 sind drei in gleichmäßigen Winkelabständen um die Längsachse des Blindniets 10 verteilt angeordnete Längsschlitze 15 eingeformt, so dass zwischen zwei benachbarten Längsschlitzen 15 jeweils ein Laschenabschnitt 16 der Niethülse 11 abgeteilt ist.

Zum Befestigen des Profilelements 9 wird in die Deckschicht 4 des jeweiligen Paneels 2 oder 3 des Deckenelements 1 in einem Zug eine Öffnung 20 eingebracht und der die Öffnung 20 umgebende Randbereich 21 kaltgeformt. Hierzu wird ein Dornwerkzeug 22 eingesetzt, das einen kegelförmig spitz zulaufenden Endabschnitt 23, einen Ziehabschnitt 24 und einen Halteabschnitt 25 aufweist. Der spitze Endabschnitt 23 des Dornwerkzeugs 22 weist an seiner Spitze einen Durchmesser auf, der kleiner ist als der Durchmesser der zu erzeugenden Öffnung 20. Der Ziehabschnitt 24 ist sprungfrei an den Endabschnitt 23 angeschlossen. Ausgehend von seiner Spitze erweitert sich dabei der Durchmesser des Endabschnitts 23 in Richtung des Ziehabschnitts 24 stufenlos, bis die Umfangsfläche 26 des Endabschnitts 23 des Dornwerkzeugs 22 stufenfrei in die Umfangsfläche 27 des zylindrisch geformten Ziehabschnitts 24 übergeht. Durch den Umfangsdurchmesser des Ziehabschnitts 24 ist somit der fertige Öffnungsdurchmesser der in die Deckschicht 4 einzubringenden Öffnung 20 festgelegt. Der den Ziehabschnitt 24 tragende Halteabschnitt 25 dient der manuellen oder maschinellen Handhabung des Dornwerkzeugs 22.

Zum Erzeugen der Öffnung 20 und des sie umgebenden Kragens 30 wird das Dornwerkzeug 22 mit seinem spitzen Endabschnitt 23 in senkrechter Ausrichtung gegen die freie Außenseite 7 der Deckschicht 4 bewegt, bis die Spitze des Endabschnitts 23 die Deckschicht 4 durchbricht. Das Dornwerkzeug 22 wird daraufhin unter kontinuierlicher Aufweitung der mit dem Durchbrechen der Deckschicht 4 gebildeten Öffnung 20 kontinuierlich weiter in Richtung der Kernschicht 6 des Paneels 2 bewegt. Dabei gleitet der die Öffnung 20 umgebende Randbereich 21 entlang der Umfangsfläche 26 des Endabschitts 23 und wird aufgrund von dessen stetig zunehmenden Außendurchmesser und der zwischen dem Randbereich 21 und der Umfangsfläche 26 des Endabschnitts 23 herrschenden Reibung in Richtung der Kernschicht 6 gezogen. Die Aufweitung der Öffnung 20 und die damit einhergehende Kaltverformung des die Öffnung 20 umgebenden Randbereichs 21 der Deckschicht 4 setzt sich fort, bis der zylindrische Ziehabschnitt 24 die Öffnung 20 erreicht hat. In diesem Moment ist die Aufweitung der Öffnung 20 abgeschlossen. Das Dornwerkzeug 22 kann nun noch weiter in den Kernabschnitt 6 vorgeschoben werden, um die Kaltverformung des Randbereichs 21 zu dem Kragen 30 der Deckschicht 4 zu vervollkommnen. Die Einführbewegung des Dornwerkzeugs 22 wird beendet, wenn das Dornwerkzeug 22 mit seinem Halteabschnitt 25 an der Außenseite 7 der Deckschicht 4 sitzt und der Randbereich 21 zu dem Kragen 30 fertig kaltverformt ist, der um die Öffnung 21 umläuft.

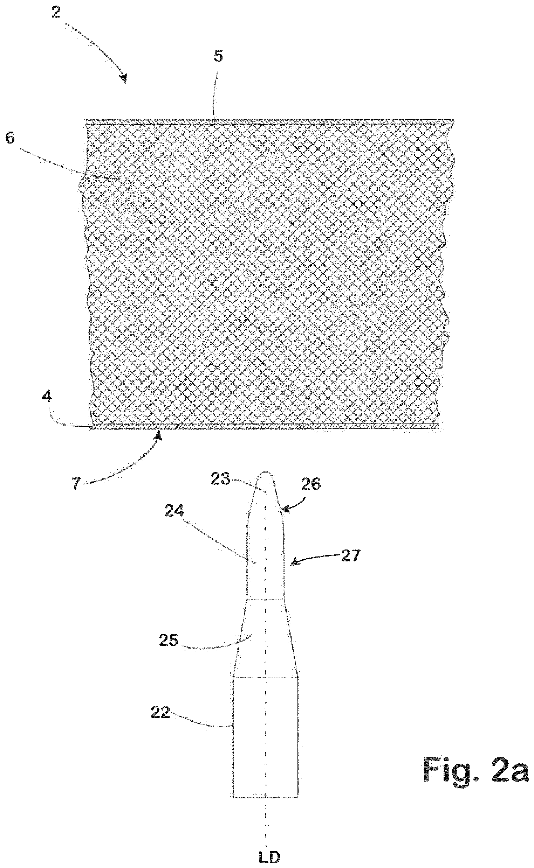

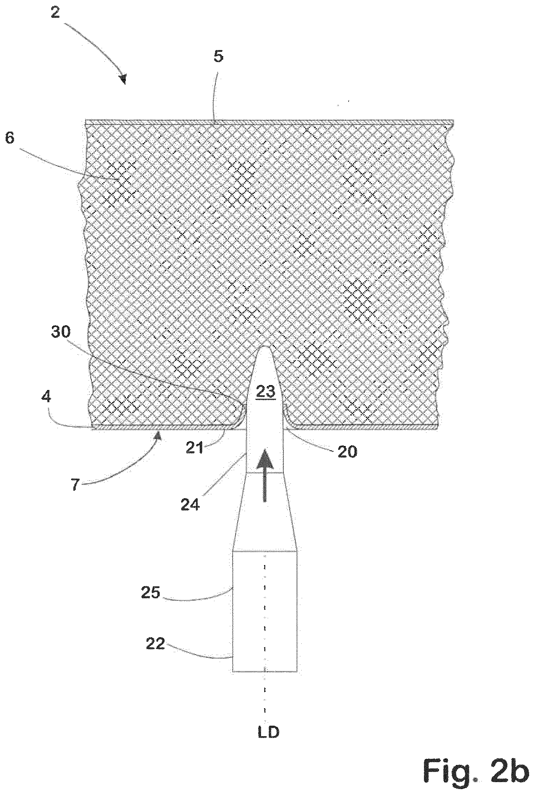

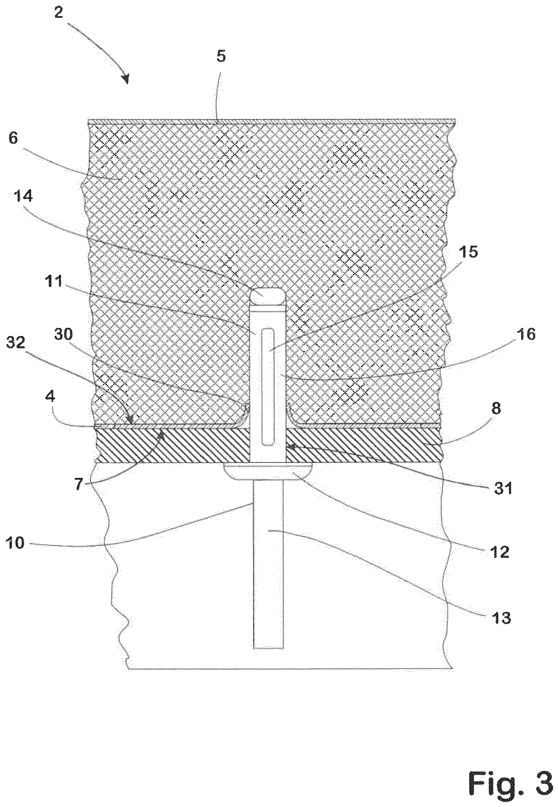

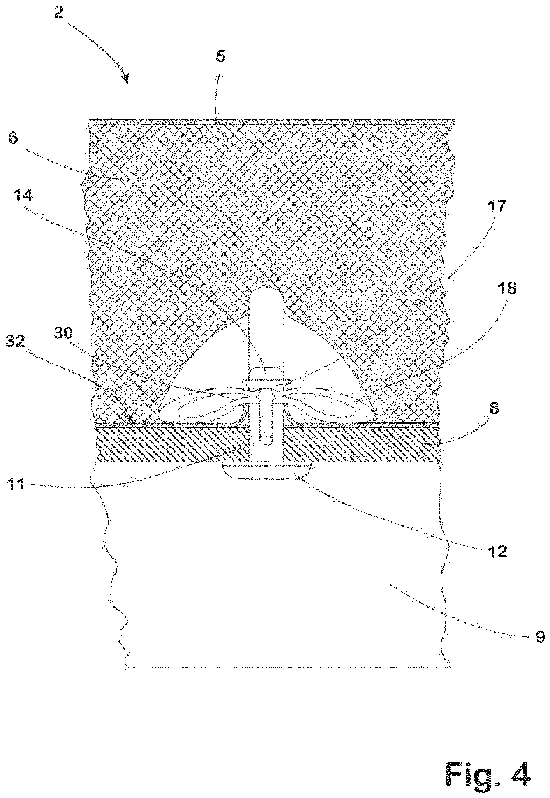

Entsprechend der Form des Dornabschnitts 24 weist der Kragen 30 im Längsschnitt betrachtet eine ausgehend von der Außenseite 7 der Deckschicht 4 des Paneels 2 gleichmäßig bogenförmig in Richtung der Kernlage 6 des Paneels 2 und in die Kernlage 6 hineinreichende Form auf (Figuren 2b, 3, 4).

Nach dem Kaltformen des Kragens 30 weist die Öffnung 20 einen Durchmesser auf, der bis auf ein geringes Übermaß dem Außendurchmesser der Niethülse 11 entspricht. In Folge der Kaltformgebung des Kragens 30 ist der Randbereich 21 aus dem der Kragen 30 kaltgeformt worden ist, kaltverfestigt und weist dementsprechend eine höhere Festigkeit und Formsteifigkeit auf als das den Kragen 30 umgebende Blechmaterial der Decklage 4, das unverformt geblieben ist.

Nun wird das Profilelement 9 an die Außenseite 7 der Deckschicht 4 angesetzt und mit einer in den Schenkel 8 eingeformten Öffnung 31 zur Deckung gebracht mit der Öffnung 20 in der Deckschicht 4. Die Öffnung 31 weist dabei denselben Durchmesser auf wie die Öffnung 20 nach der Kaltformgebung des Kragens 30.

Durch die zueinander in Deckung gebrachten Öffnungen 31,20 wird nun ein Blindniet 10 mit seiner Niethülse 11 und dem auf der Niethülse 11 sitzenden Nietdornkopf 14 gesteckt. Der Blindniet 10 wird dabei soweit in die Kernlage 6 des jeweiligen Paneels 2,3 geschoben, bis der Setzkopf 12 des Blindniets 10 mit seiner der Niethülse 11 zugeordneten, um die Niethülse 11 umlaufenden Setzfläche dicht an der von der Deckschicht 4 abgewandten Seite des Schenkels 8 des Profilelements 9 sitzt.

Anschließend wird mittels eines hierfür geeigneten, aus dem Stand der Technik bekannten (siehe beispielsweise oben genanntes PRAXISHANDBUCH) Nietwerkzeugs der Nietdorn 13 mit einer aus der Kernlage 6 herausgerichteten Zugkraft belastet, so dass der Nietdornkopf 14 unter Verformung der Niethülse 11 in Richtung der Deckschicht 4 gezogen wird. Dabei falten sich die Laschenabschnitte 16 in radialer Richtung RD nach außen auf. Aus der Niethülse 11 wird auf diese Weise ein Schließkopf 17 der Blindniet 10 gebildet, der mit drei durch die Laschenabschnitte 16 gebildete und sternförmig in radialer Richtung RD abstehenden Laschen 18 großflächig auf der der Kernlage 6 zugeordneten Innenseite 32 der Deckschicht 4 anliegt. Sobald dieser Zustand erreicht ist, steigen die von dem Nietwerkzeug auf den Nietdorn 13 ausgebübten Zugkräfte an, bis der Nietdorn 13 an der hierfür vorgesehenen Sollbruchstelle im Bereich des Blindniets 10 abreißt.

Auf diese Weise ist eine sichere Fixierung des Profilelements 9 an dem Deckenelement 1 erreicht. Dabei stellt der durch Kaltverformung erhaltene Kragen 30 sicher, dass die Decklage 4 trotz des Fehlens weiterer Verstärkungsmaßnahmen, insbesondere trotz des Fehlens von auf der Innenseite 32 der Deckschicht 4 angebrachten Verstärkungsblechen, in dem Bereich, an dem der Blindniet 10 im fertig vernieteten Zustand mit seinem Setzkopf 12 und seinem Schließkopf 17 abgestützt ist, eine so hohe Festigkeit und Formsteifigkeit besitzt, dass die durch den Blindniet 10 gebildete Vernietung V das Profilelement 9 auch dann sicher an der Deckschicht 4 hält, wenn hohe Lasten auf das Profilelement 9 und damit einhergehend auf die jeweilige Vernietung V wirken.

### BEZUGSZEICHEN

- 1: Dachelement
- 2,3: Paneele des Dachelements 1
- 4,5: Deckschichten der Paneele 2,3
- 6: Kernlage der Paneele 2,3
- 7: dem Laderaum R zugeordnete Außenseite 7 der Deckschicht 4
- 8: an der Außenseite 7 der Deckschicht 4 anliegender Schenkel des Profilelements 9
- 9: Profilelement
- 10: Blindnieten
- 11: Niethülse der Blindnieten 10
- 12: Setzkopf der Blindnieten 10
- 13: Nietdorn der Blindnieten 10
- 14: Nietdornkopf der Blindnieten 10
- 15: Längsschlitze der Niethülse 11
- 16: Laschenabschnitte der Niethülse 11
- 17: Schließkopf der Blindniet 10
- 18: Laschen des Schließkopfs 17
- 20: in die Deckschicht 4 eingebrachte Öffnung
- 21: die Öffnung umgebender Randbereich der Deckschicht 4
- 22: Dornwerkzeug
- 23: spitz zulaufender Endabschnitt des Dornwerkzeugs 22
- 24: Ziehabschnitt des Dornwerkzeugs 22
- 25: Halteabschnitt des Dornwerkzeugs 22
- 26: Umfangsfläche des Endabschnitts 23
- 27: Umfangsfläche des Ziehabschnitts 24
- 30: Kragen
- 31: Öffnung im Schenkel 8
- 32: der Kernschicht 6 zugeordnete Innenseite der Deckschicht 4

- LD: Längsachse des Dornwerkzeugs 22
- R: Laderaum
- RD: radiale Richtung
- V: Vernietungen

## Patentansprüche

1. Aufbau eines Nutzfahrzeugs, wobei der Aufbau ein Wand- oder ein Dachelement (1) umfasst, das durch ein Paneel (2,3) gebildet ist, welches nach Art eines Sandwiches aus einer geschäumten Kernschicht (6) und mindestens einer aus einem umformbaren Material bestehenden Deckschicht (4,5) gebildet ist, die die Kernschicht (6) an einer ihrer Seitenflächen bedeckt, und wobei an der von der Kernschicht (6) abgewandten Außenseite (7) der Deckschicht (4,5) ein Bauteil (9) durch eine Vernietung mittels eines Blindniets (10) befestigt ist, der in zueinander fluchtend in das Bauteil (9) und die Deckschicht (4,5) eingebrachten Öffnungen (20,31) sitzt, **dadurch gekennzeichnet, dass** der die Öffnung (20) der Deckschicht (4,5) umgrenzende Randbereich (21) der Deckschicht (4,5) zumindest abschnittsweise zu einem in die Kernschicht (6) hineinragenden Kragen (30) kaltumgeformt ist, der in Folge seiner Kaltumformung eine höhere Formsteifigkeit besitzt, als der den Kragen (30) umgebende Bereich der Deckschicht (4,5).

2. Aufbau eines Nutzfahrzeugs nach Anspruch 1, **dadurch gekennzeichnet, dass** der Blindniet (10) ein Presslaschenblindniet ist.

3. Aufbau nach einem der voranstehenden Ansprüche, **dadurch gekennzeichnet, dass** die Deckschicht (4,5) durch ein Leichtmetallblech gebildet ist.

4. Aufbau nach einem der voranstehenden Ansprüche, **dadurch gekennzeichnet, dass** der Kragen (30) um die Öffnung (20) der Deckschicht (4,5) umläuft.

5. Aufbau nach einem der voranstehenden Ansprüche, **dadurch gekennzeichnet, dass** der Kragen (30) in einem Schnitt längs der Längsachse der Öffnung (20) gesehen einen gleichmäßig in die Kernschicht (6) hinein gekrümmten Bogenabschnitt umfasst.

6. Aufbau nach Anspruch 5, **dadurch gekennzeichnet, dass** der Bogenabschnitt einen Viertelkreis bildet.

7. Verfahren zum Befestigen eines Bauteils an einem Wand- oder einem Dachelement (1) eines Aufbaus eines Nutzfahrzeugs, das durch ein Paneel (2,3) gebildet ist, welches nach Art eines Sandwiches aus einer geschäumten Kernschicht (6) und mindestens einer aus einem plastisch verformbaren Material bestehenden Deckschicht (4,5) gebildet ist, die die Kernschicht (6) an einer ihrer Seitenflächen bedeckt, umfassend folgende Arbeitsschritte:
a) Bereitstellen des Paneels (2,3);
b) Einbringen einer Öffnung (20) in die Deckschicht (4,5) des Paneels (2,3);
c) Kaltumformen des die eingebrachte Öffnung (20) umgrenzenden Randbereichs (21) der Deckschicht (4,5) mittels eines Dornwerkzeugs (22) zu einem in die Kernschicht (6) hineinragenden Kragen;
d) Ansetzen des Bauteils an die Außenseite der Deckschicht (4,5) des Paneels (2,3) und Ausrichten eine an dem Bauteil (9) vorgesehenen Öffnung (31) derart, dass die Öffnung (31) des Bauteils (9) mit der in die Deckschicht (4,5) des Paneels (2,3) eingebrachten Öffnung (20) zur Deckung gebracht ist;
e) Fixieren des Bauteils an dem Paneel (2,3) mittels eines Blindniets (10), der durch die zueinander in Deckung gebrachten Öffnungen (20,31) des Bauteils (9) und der Deckschicht (4,5) gesteckt wird.

8. Verfahren nach Anspruch 7, **dadurch gekennzeichnet, dass** die Arbeitsschritte b) und c) in einem Zug unterbrechungsfrei aufeinanderfolgend mit einem einzigen Werkzeug durchgeführt werden.

## Claims

1. Body of a commercial vehicle, wherein the body comprises a wall or a roof element (1) formed by a panel (2, 3) which is formed in the manner of a sandwich made of a foamed core layer (6) and at least one cover layer (4, 5) consisting of a reshapable material and covering the core layer (6) on one of its side surfaces and wherein on the outer side (7) of the cover layer (4, 5) facing away from the core layer (6) a component (9) is fastened by riveting by means of a blind rivet (10), which sits in openings (20, 31) introduced into the component (9) and the cover layer (4, 5) so as to align with one another, **characterised in that** the edge region (21) of the cover layer (4, 5) bordering the opening (20) of the cover layer (4, 5) is cold-formed, at least in sections, into a collar (30) protruding into the core layer (6), which has, as a result of its cold forming, a higher inherent rigidity than the region of the cover layer (4, 5) surrounding the collar (30).

2. Body of a commercial vehicle according to claim 1, **characterised in that** the blind rivet (10) is a press-tab blind rivet.

3. Body according to any one of the preceding claims, **characterised in that** the cover layer (4, 5) is formed by a light metal sheet.

4. Body according to any one of the preceding claims, **characterised in that** the collar (30) runs around the opening (20) of the cover layer (4, 5).

5. Body according to any one of the preceding claims, **characterised in that** the collar (30) comprises, when viewed in a section along the longitudinal axis of the opening (20), an arc section evenly curved into the core layer (6).

6. Body according to claim 5, **characterised in that** the arc section forms a quarter circle.

7. Method for fastening a component to a wall or a roof element (1) of a body of a commercial vehicle, which is formed by a panel (2, 3) which is formed in the manner of a sandwich made of a foamed core layer (6) and at least one cover layer (4, 5) consisting of a plastically deformable material and covering the core layer (6) on one of its side surfaces, comprising the following work steps:
a) providing the panel (2, 3);
b) introducing an opening (20) into the cover layer (4, 5) of the panel (2, 3);
c) cold forming the edge region (21) of the cover layer (4, 5) bordering the introduced opening (20) by means of a mandrel tool (22) into a collar protruding into the core layer (6);
d) attaching the component to the outer side of the cover layer (4, 5) of the panel (2, 3) and aligning an opening (31) provided on the component (9) in such manner that the opening (31) of the component (9) is aligned with the opening (20) introduced into the cover layer (4, 5) of the panel (2, 3);
e) fixing the component on the panel (2, 3) by means of a blind rivet (10) which is inserted through the openings (20, 31) of the component (9) and the cover layer (4, 5) which are aligned with one another.

8. Method according to claim 7, **characterised in that** the work steps b) and c) are carried out in one go uninterrupted and one after another using a single tool.

## Revendications

1. Structure d'un véhicule utilitaire, où la structure comprend un élément de paroi ou de toit (1) qui est formé par un panneau (2, 3, lequel panneau est formé à la manière d'un sandwich à partir d'une couche centrale en mousse (6) et d'au moins une couche de recouvrement (4, 5) constituée d'un matériau déformable, laquelle couche de recouvrement recouvre la couche centrale (6) sur l'une de ses faces latérales, et où, sur la face extérieure (7) de la couche de recouvrement (4, 5) orientée de manière opposée à la couche centrale (6), un composant (9) est fixé par rivetage au moyen d'un rivet aveugle (10), lequel rivet est logé dans des ouvertures (20, 31) pratiquées dans le composant (9) et la couche de recouvrement (4, 5) en alignement l'une avec l'autre,
**caractérisée**
**en ce que** la zone de bordure (21) de la couche de recouvrement (4, 5) limitrophe à l'ouverture (20) de la couche de recouvrement (4, 5) est formée à froid, au moins par sections, pour former un collet (30) qui fait saillie dans la couche centrale (6) et qui, du fait de sa formation à froid, présente une rigidité dimensionnelle plus élevée que la zone de la couche de recouvrement (4, 5) entourant le collet (30).

2. Structure d'un véhicule utilitaire selon la revendication 1, **caractérisée en ce que** le rivet aveugle (10) est un rivet aveugle à planguette de pression.

3. Structure selon l'une des revendications précédentes, **caractérisée en ce que** la couche de recouvrement (4, 5) est formée par une plaque de métal léger.

4. Structure selon l'une des revendications précédentes, **caractérisée en ce que** le collet (30) s'étend autour de l'ouverture (20) de la couche de recouvrement (4, 5).

5. Structure selon l'une quelconque des revendications précédentes, **caractérisée en ce que** le collet (30), vu en coupe le long de l'axe longitudinal de l'ouverture (20), comprend une partie arquée incurvée uniformément jusque dans la couche centrale (6),

6. Structure selon la revendication 5, **caractérisée en ce que** la partie arquée forme un quart de cercle.

7. Procédé de fixation d'un composant à un élément de paroi ou de toit (1) d'une structure d'un véhicule utilitaire, lequel élément est formé par un panneau (2, 3), lequel panneau est formé à la manière d'un sandwich à partir d'une couche centrale en mousse (6) et d'au moins une couche de recouvrement (4, 5) constituée d'un matériau déformable, laquelle couche de recouvrement recouvre la couche centrale (6) sur l'une de ses faces latérales, comprenant les étapes de travail suivantes :
a) mise à disposition du panneau (2,3) ;
b) réalisation d'une ouverture (20) dans la couche de recouvrement (4, 5) du panneau (2, 3) ;
c) déformation à froid de la zone de bordure (21) de la couche de recouvrement (4, 5) entourant l'ouverture (20) au moyen d'un outil à mandrin (22) pour former un collet faisant saillie dans la couche centrale (6) ;
d) placement du composant au niveau de la face extérieure de la couche de recouvrement (4, 5) du panneau (2, 3) et alignement d'une ouverture (31) prévue sur le composant (9) de telle sorte que l'ouverture (31) du composant (9) soit amenée en alignement avec l'ouverture (20) pratiquée dans la couche de recouvrement (4, 5) du panneau (2, 3) ;
e) fixation du composant au panneau (2, 3) au moyen d'un rivet aveugle (10), lequel rivet est inséré à travers les ouvertures alignées (20, 31) du composant (9) et de la couche de recouvrement (4, 5).

8. Procédé selon la revendication 7, **caractérisé en ce que** les étapes de travail b) et c) sont réalisées ensemble, successivement sans interruption en utilisant un seul outil.
